# EUROPÄISCHE PATENTSCHRIFT

(11) **EP 2 496 618 B1**
(45) Veröffentlichungstag und Bekanntmachung des Hinweises auf die Patenterteilung: **21.01.2015**
(21) Anmeldenummer: 10771777.9
(22) Anmeldetag: 03.11.2010
(51) Int. Cl.: C08G 18/42, C08G 18/66, C08J 9/12

(54) **VERFAHREN ZUR HERSTELLUNG EINES POLYURETHANSCHAUMS UND HIERAUS ERHÄLTLICHER POLYURETHANSCHAUM**
METHOD FOR PRODUCING A POLYURETHANE FOAM AND POLYURETHANE FOAM OBTAINABLE THEREBY
PROCÉDÉ DE PRODUCTION D'UNE MOUSSE DE POLYURÉTHANE ET MOUSSE DE POLYURÉTHANE AINSI OBTENUE

(30) Priorität: 06.11.2009 DE 102009053224
(43) Veröffentlichungstag der Anmeldung: 12.09.2012
(73) Patentinhaber: Bayer Intellectual Property GmbH, 40789 Monheim (DE)
(72) Erfinder: LINDNER, Stefan, 50670 Köln (DE); FRIEDERICHS, Wolfgang, 50933 Köln (DE); STREY, Reinhard, 41540 Dormagen (DE); SOTTMANN, Thomas, 50823 Köln (DE); KHAZOVA, Elena, 68169 Mannheim (DE); KRAMER, Lorenz, 50937 Köln (DE); DAHL, Verena, 51429 Bergisch Gladbach (DE); CHALBI, Agnes, 50354 Hürth (DE)
(86) Internationale Anmeldenummer: PCT/EP2010/066738
(87) Internationale Veröffentlichungsnummer: WO 2011/054868

(56) Entgegenhaltungen:
- EP-A2- 0 353 061
- WO-A1-01/98389
- DE-A1- 10 260 815
- US-A1- 2004 054 022

## Beschreibung

Die vorliegende Erfindung betrifft ein Verfahren zur Herstellung eines Polyurethanschaums. Ein weiterer Gegenstand der Erfindung ist ein nach dem erfindungsgemäßen Verfahren erhältlicher Polyurethanschaum. Insbesondere können solche Schäume eine bimodale Zellgrößenverteilung aufweisen.

Nanozelluläre oder nanoporöse Polymerschaumstoffe sind aufgrund von theoretischen Betrachtungen besonders gute Materialien für die Wärmeisolation. Hierbei liegen die inneren Abmessungen der Sclaumstrukturen im Bereich der mittleren freien Weglänge eines Gasmoleküls. Auf diese Weise kann der Anteil des Gases am Wärmetransport verringert werden. Eine häufig in der Wärmedämmung verwendete Polymergruppe sind Polyurethane.

Bei der Herstellung von Polyurethanschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlendioxid, das auch als Treibmittel wirkt.

Der für die Schaumbildung und damit für die spätere Zellgröße des ausgehärteten Schaums entscheidende Schritt ist die Nukleierung von Treibmitteln, da jede Zelle im Schaum aus einer Gasblase entstanden ist. Hierbei ist zu beobachten, dass in der Regel nach der Nukleierung keine neuen Gasblasen entstehen, sondern Treibmittel in bereits bestehende Gasblasen hineindiffundiert.

Die Zugabe von Stabilisatoren unterstützt die Emulgierung der verschiedenen Komponenten, beeinflusst die Nukleierung und verhindert die Koaleszenz der wachsenden Gasblasen. Außerdem beeinflussen sie die Zellöffnung. Bei offenzelligen Schäumen werden die Membranen der wachsenden Poren geöffnet und die Stege der Poren bleiben bestehen.

Ein möglicher Ansatz ist es, ein überkritisches Treibmittel in der Reaktionsmischung zu emulgieren und dann nach einer Druckerniedrigung den Schaum auszuhärten. Als Variante davon ist das POSME-Verfahren (principle ofsupercritical micro emulsion expansion) bekannt. In diesem liegt das Treibmittel in Form einer Mikroemulsion vor. Mikroemulsionen bilden sich unter bestimmten Bedingungen, welche unter anderem von der Konzentration der Emulgatoren und der Temperatur abhängen. Mikroemulsionen zeichnen sich dadurch aus, dass sie stabil sind und dass die unpolare Phase, also hier das Treibmittel, in sehr kleinen Tröpfchen innerhalb der polaren Phase vorliegen kann. Die Durchmesser solcher Tröpfchen können in einem Bereich von 1 bis 100 Nanometern liegen.

DE 102 60 815 A1 offenbart aufgeschäumtes Material und ein Herstellverfahren für das aufgeschäumte Material. Aufgeschäumtes Material mit Schaumblasen in Nanogröße soll erzeugt werden, ohne dass die Energiebarriere, die üblicherweise bei Phasenumwandlungen und Keimbildungsprozessen auftritt, überwunden werden muss. Verbunden damit ist das Ziel, ein aufgeschäumtes Material kontrollierbar zu erzeugen, welches eine Anzahldichte von Schaumblasen zwischen 10¹² und 10¹⁸ pro cm³ sowie einen mittleren Durchmesser der Schaumblasen zwischen 10 nm und 10 µm hat. Grundlage ist die Dispersion eines zweiten Fluids in Form von Pools in einer Matrix eines ersten Fluids. In einem Reaktionsraum liegen das erste Fluid als Matrix und das zweite Fluid in Pools vor. Durch Druck- und/oder Temperaturänderung wird das zweite Fluid in einen nahe- oder überkritischen Zustand mit einer flüssigkeitsnahen Dichte überführt. Somit liegt das zweite Fluid vollständig oder nahezu vollständig in Pools vor, die im gesamten ersten Fluid gleichmäßig verteilt sind. Durch Druckentlastung kehrt das zweite Fluid in einen Zustand gasförmiger Dichte zurück, wobei die Pools zu Schaumblasen in Nanometer-Größe aufgebläht werden. Es muss keine Energiebarriere überwunden werden, noch müssen die Treibmittelmoleküle zu den wachsenden Blasen diffundieren.

Als erstes Fluid wird hier allgemein eine polymerisierbare Substanz vorgeschlagen. Ausdrücklich erwähnt werden jedoch nur Acrylamid, welches zu Polyacrylamid polymerisiert, und Melamin, welches zu Melamin-Harz polymerisiert. Das zweite Fluid sollte aus einer Stoffgruppe von Kohlenwasserstoffen wie Methan oder Ethan, weiterhin Alkanolen, Fluorchlorkohlenwasserstoffen oder CO₂ ausgewählt sein. Weiterhin wird ein amphiphiles Material eingesetzt, welches mindestens einen dem ersten Fluid zugeneigten Block und mindestens einem dem zweiten Fluid zugeneigten Block aufweisen sollte.

US 2004/054022 offenbart die Herstellung von Polyurethanschäumen ausgehend von einer Tensidhaltigen Polyolkomponente wobei Kohlendioxid unter überkritischen Bedingungen in dem Polyol eingeleitet wird. Als Polyisocyanat wird PMDI verendet.

EP 0 353 061 veröffentlicht die Herstellung von Polyurethanschäumen ausgehend von unter überkritischen Bedingungen CO₂ gesättigten Polyol.

Hinsichtlich Polyurethanschäumen offenbart WO 2007/094780 A1 eine Harzzusammensetzung mit einem Polyol, einem mit einer kurzkettigen Verbindung initiierten ethoxylierten/propoxylierten Tensid sowie einem Kohlenwasserstoff als Treibmittel. Durch das ethoxylierte/propoxylierte Tensid wird die Löslichkeit und/oder Kompatibilität des Kohlenwasserstoff-Treibmittels erhöht und die Phasenstabilität der Harzzusammensetzung verbessert. Die Harzzusammensetzung eignet sich zur Reaktion mit polyfunktionellen organischen Isocyanaten für die Herstellung von zellulären Polyurethan- und Polyisocyanuratschäumen.

Die Tenside werden erhalten durch die Reaktion von Ethylenoxid und Propylenoxid mit einem Initiator aus der Gruppe von Verbindungen mit einem alkylenoxidaktiven Wasserstoff-Atom und einer C₁ bis C₆ aliphatischen oder alicyclischen Kohlenwasserstoffgruppe, Verbindungen mit einem alkylenoxidaktiven Wasserstoff-Atom und einer C₆ bis C₁₀ Aryl- oder Alkylaryl-Kohlenwasserstoffgruppe oder Kombinationen davon. Der Initiator wird vorzugsweise aus der Gruppe der C₁ bis C₆ aliphatischen oder alicyclischen Alkohole, Phenol, C₁ bis C₄ Alkylphenole und deren Kombinationen ausgewählt.

Als Beispiel wird durch Butanol initiiertes Propylenoxid/Ethylenoxid-Tensid genannt. Alternativ kann das Tensid auch ein alkoxyliertes Triglycerid-Addukt oder ein ethoxyliertes Derivat eines Sorbitanesters umfassen. Das Treibmittel kann ein C₄ bis C₇ aliphatischer Kohlenwasserstoff, C₄ bis C₇ cycloaliphatischer Kohlenwasserstoff oder eine Kombination davon sein. Als Beispiel werden Pentane genannt.

In den genannten Beispielen wird jedoch keine Polyolzusammensetzung offenbart, in welcher durch die Wahl der Tenside das Treibmittel in Form einer Mikroemulsion vorliegt.

Spezielle Siloxantenside werden unter anderem in US 2005/0131090 A1 behandelt. Offenbart wird hier ein Verfahren zur Herstellung von Polyurethan-Hartschäumen durch Reaktion eines Polyisocyanats und eines Polyols in Gegenwart eines Urethanisierungskatalysators, eines Treibmittels, optional Wasser und eines Silikontensids. Eingesetzte Treibmittel sind C₄- oder C₅-Kohlenwasserstoffe oder ihre Mischungen. Die Treibmittel haben ein mittleres Molekulargewicht von ≤ 72 g/mol und einen Siedepunkt im Bereich von 27,8 bis 50 °C. Das Silikontensid umfasst ein Polyether-Polysiloxan-Copolymer, welches durch die folgende allgemeine Formel dargestellt wird: (CH₃)₃-Si-O- (Si(CH₃)₂-O)ₓ- (Si(CH₃)(R)O)_{y}-Si(CH₃)₃, worin gilt:

R = (CH₂)₃-O-(-CH₂-CH₂-O)ₐ- (CH₂-CH(CH₃) -O)_{b}-R" und worin R" für H, (CH₂)_{z}CH₃ oder C(O)CH₃ steht. Weiterhin gilt: x+y+2 ist 60-130, x/y ist 5-14 und z ist 0-4. Das Gesamtmolekulargewicht des Tensids, basierend auf obiger Formel, ist 7000-30,000 g/mol. Der Gewichtsanteil des Siloxans in dem Tensid beträgt 32-70 Gewichts-%, das mittlere Molekulargewicht BAMW (blend average molecular weight) des Polyetheranteils ist 450-1000 g/mol und der Gehalt an Ethylenoxid, ausgedrückt in mol-%, in dem Polyetheranteil beträgt 70-100 mol%. Diese Veröffentlichung betrifft jedoch keine Mikroemulsionen oder Treibmittel im überkritischen Zustand. Vielmehr wird das Siloxantensid als Zellstabilisierungsmittel eingesetzt.

GB 2 365 013 A offenbart alkylenoxidmodifizierte Silikonglykole für stabile Polyesterpolyol-Zusammensetzungen. Eine Polyesterpolyol-Zusammensetzung umfasst ein Phthalsäureanhydridinitiiertes Polyesterpolyol, ein C₄-C₆-Kohlenwasserstofftreibmittel und ein alkylenmodifiziertes Silikonglykol-Kompatibiliserungsmittel mit einem HLB-Wert von ungefähr 5 bis ungefähr 8. Das Treibmittel ist in der Polyolzusammensetzung löslich, wodurch das mit solchen Treibmitteln verbundene Risiko in der Herstellung von Polymerhartschaumartikeln verringert wird. Hartschäume mit guter Dimensionsstabilität und verbesserten Isolationseigenschaften werden bereitgestellt. Ebenfalls offenbart wird ein isocyanatmodifiziertes Silikonglykol-Kompatibilisierungsmittel.

In dieser Patentanmeldung wird angegeben, dass in einigen Fällen ein bestimmtes Treibmittel mit dem Polyol und anderen Komponenten eine Mikroemulsion bildet. Allerdings ist nicht offenbart, ob hierbei für das Treibmittel überkritische Bedingungen herrschen. Vielmehr bezieht sich der Hinweis auf Mikroemulsionen auf den Test zur Bestimmung der Lagerstabilität der Polyolzusammensetzungen. In diesem Test werden die Polyolzusammensetzung und das Treibmittel in einem Glas mit Deckel vermischt, geschüttelt und für fünf Tage bei Raumtemperatur gelagert. Wenn keine Phasentrennung auftritt, wird das Treibmittel für in der Polyolzusammensetzung löslich und die Zusammensetzung für lagerstabil befunden. Eine Aufbewahrung in einem Glas mit Deckel bei Raumtemperatur lässt allerdings keine Bedingungen erwarten, unter denen ein C₄-C₆-Kohlenwasserstoff im überkritischen Zustand vorliegt.

Weiterhin wird in dieser Patentanmeldung erwähnt, dass in der Herstellung der Schäume die Ausgangsstoffe bei einer Temperatur von 15 °C bis 90 °C, vorzugsweise von 20 °C bis 35 °C in eine offene oder geschlossene Form eingebracht werden können. Hierbei kann ein Druck oberhalb des Atmosphärendrucks herrschen. Das Mischen des Isocyanats mit der Polyolzusammensetzung, die gelöstes Treibmittel enthält, kann durch Rühren oder unter hohem Druck durch Injektion geschehen. Die Temperatur der Form kann 20 °C bis 110 °C, vorzugsweise 30 °C bis 60 °C und insbesondere 45 °C bis 50 °C betragen. Auch hier finden sich keine Hinweise darauf, dass für das Treibmittel überkritische Bedingungen herrschen.

Die schlagartige Entspannung CO₂-haltigen Reaktionsmischungen wird in WO 2001/98389 A1 beschrieben. Diese Patentanmeldung betrifft ein Verfahren zur Herstellung von Polyurethan-Blockschaum, wobei eine Kohlendioxid enthaltende Polyurethan-Reaktivmischung plötzlich von einem Druck oberhalb des Gleichgewichtslösungsdruckes des Kohlendioxids auf Normaldruck entspannt wird. Die flüssige Polyurethan-Reaktivmischung wird unter Freisetzung von gelöstem Kohlendioxid aufschäumt, die aufgeschäumte Mischung wird auf ein Substrat aufgebracht und anschließend zum Blockschaum ausgehärtet. Das Kohlendioxid wird zunächst bei einem wesentlich oberhalb des Gleichgewichtslösungsdruckes liegenden Druck in der Reaktivmischung oder mindestens einer der Komponenten Polyol und Isocyanat vollständig gelöst. Anschließend wird der Druck auf einen Druck nahe des Gleichgewichtslösungsdruckes herabgesetzt, wobei zwischenzeitlich der Gleichgewichtslösungsdruck unter Freisetzung geringer Mengen des Kohlendioxids unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlendioxid wieder vollständig aufgelöst wird. Allerdings finden sich hier keine Hinweise auf nanozelluläre Schäume oder überkritische Bedingungen für das Treibmittel.

Ein Schaum mit einer multimodalen Zellgrößenverteilung (multimodaler Schaum) bietet Leistungsvorteile, wie etwa größere Zähigkeit und verbesserte Isolierfähigkeit, gegenüber einem konventionellen Schaum der gleichen Polymerzusammensetzung, der aber eine im Allegemeinen einheitliche Zellgrößenverteilung hat. Ein Schaum mit einer bimodalen Zellgrößenverteilung (bimodaler Schaum) ist eine Art eines multimodalen Schaums.

In der Vergangenheit beschriebene Verfahren zur Herstellung von multimodalen Schäumen expandieren eine aufschäumbare Polymerzusammensetzung, die Wasser enthält. Wasser neigt dazu, korrosive Säure zu erzeugen, wenn es mit halogenierten feuerhemmenden Mitteln reagiert. Die korrosive Säure ist unerwünscht, da sie die Prozessapparatur korrodieren kann. Ein Verfahren zur Herstellung eines multimodalen Schaums, das kein Wasser und vorzugsweise ein umweltfreundliches Treibmittel erfordert, wird in WO 2002/034823 A1 beschrieben.

Diese Patentanmeldung betrifft ein Verfahren zur Herstellung eines multimodalen thermoplastischen Polymerschaums, das die folgenden aufeinanderfolgenden Schritte umfasst: (a) Dispergieren eines Treibmittelstabilisators und eines Treibmittels in einem wärmeplastizierten thermoplastischen Polymerharz bei einem Anfangsdruck, um eine aufschäumbare Zusammensetzung zu bilden, und (b) Expandieren der aufschäumbaren Polymerzusammensetzung im Wesentlichen in Abwesenheit von Wasser und bei einem Druck, der geringer als dieser Anfangsdruck ist, um einen multimodalen thermoplastischen Schaum zu erzeugen.

Nachteilig hieran ist jedoch, dass nur wärmeplastifizierbare Thermoplaste verarbeitet werden können. Dieses Verfahren schließt zum Beispiel duroplastische Polyurethanpolymere aus. Wünschenswert wären jedoch Verfahren zur Herstellung von Polyurethanschäumen mit insbesondere bimodaler Zellgrößenverteilung unter Einsatz überkritischer Treibmittel zur Erreichung von kleinen Zellgrößen.

Erfindungsgemäß vorgeschlagen wird daher ein Verfahren zur Herstellung eines Polyurethanschaums, umfassend die Schritte:
- Bereitstellen einer Mischung in einem Mischkopf, wobei die Mischung umfasst:
   A) eine gegenüber Isocyanaten reaktive Komponente;
   B) eine Tensidkomponente;
   C) eine Treibmittelkomponente ausgewählt ist aus der Gruppe umfassend lineare, verzweigte oder cyclische C₁- bis C₆-Alkane, lineare, verzweigte oder cyclische C₁-bis C₆-Fluoralkane, N₂, O₂, Argon und/oder CO₂,
      wobei die Treibmittelkomponente C) im überkritischen oder nahekritischen Zustand vorliegt;
   D) eine Polyisocyanatkomponente;
- Austragen der Mischung umfassend die Komponenten A), B), C) und D) aus dem Mischkopf, wobei beim Austragen der Mischung der in der Mischung herrschende Druck auf Atmosphärendruck erniedrigt wird.

Durch das erfindungsgemäße Verfahren lassen sich Polyurethanschäume mit sehr kleinen Porengrößen und auch Schäume mit bimodaler Zellgrößenverteilung erhalten. Beispielsweise kann ein Maximum der Zellgrößenverteilung im Bereich von ≥ 10 nm bis ≤ 500 nm liegen und ein weiteres Maximum der Zellgrößenverteilung im Bereich von ≥ 1 µm bis ≤ 500 µm.

Im Verfahren wird überkritisches oder nahekritisches Treibmittel verwendet. Im Rahmen der vorliegenden Erfindung liegen nahekritische Bedingungen dann vor, wenn die folgende Bedingung erfüllt ist: (T_{c} - T)/T ≤ 0,4 und/oder (p_{c} - p)/p ≤ 0,4. Hierbei bedeuten T die im Verfahren herrschende Temperatur, T_{c} die kritische Temperatur des Treibmittels oder Treibmittelgemisches, p der im Verfahren herrschende Druck und p_{c} der kritische Druck für das Treibmittel oder Treibmittelgemisch. Vorzugsweise liegen nahekritische Bedingungen vor, wenn gilt: (T_{c} - T)/T ≤ 0,3 und/oder (p_{c} - p)/p ≤ 0,3 und besonders bevorzugt (T_{c} - T)/T ≤ 0,2 und/oder (p_{c} - p)/p ≤ 0,2. Ohne auf eine Theorie festgelegt zu sein, wird angenommen, dass durch die Wahl von geeigneten Tensidkomponenten sich Emulsionen oder Mikroemulsionen des überkritischen oder nahekritischen Treibmittels in der Phase mit gegenüber Isocyanaten reaktiven Komponenten bilden.

Die Mischung umfassend die Komponenten A), B), C) und D) kann beispielsweise erhalten werden, indem in einem Hochdruck-Mischkopf unter für das Treibmittel überkritischen oder nahekritischen Bedingungen alle Komponenten mit Ausnahme der Polyisocyanatkomponente vorgelegt werden und dann mit dem Polyisocyanat D) versetzt werden.

Beim Austragen der Mischung aus dem Mischkopf wird der in der Mischung herrschende Druck auf Atmosphärendruck erniedrigt. Unter Atmosphärendruck ist hierbei insbesondere ein Druck von ≥ 0,9 bar bis ≤ 1,1 bar zu verstehen. Hierbei geht das Treibmittel in den unterkritischen und vorzugsweise in den gasförmigen Zustand über. Beispielsweise kann das Reaktionsgemisch aus dem Mischkopf einfach in eine offene Form eingebracht werden oder kontinuierlich für die Herstellung von Platten, wie zum Beispiel durch Freischaumanlagen oder Doppeltransportanlagen, genutzt werden.

Ein Schaum mit einer bimodalen Zellgrößenverteilung im Sinne der vorliegenden Erfindung liegt dann vor, wenn ein Graph der repräsentativen Querschnittsfläche gegen die Zellgröße zwei Maxima aufweist. Eine "repräsentative Querschnittsfläche" ist ein Produkt aus einer Anzahl von Zellen einer gegebenen Größe und der Querschnittsfläche der Zelle. Eine repräsentative Querschnittsfläche entspricht dem, wie viel Fläche der Rasterelektronenmikroskop-Aufnahme Zellen einer gegebenen Größe besetzen. Zellgröße bezieht sich auf Zelldurchmesser und die beiden Begriffe sind hierin austauschbar.

Man verwendet eine rasterelektronenmikroskopische (SEM-) Aufnahme eines Querschnitts eines Schaums, um Daten des Zelldurchmessers und der repräsentativen Querschnittsfläche für den Schaum zu sammeln. Die SEM-Aufnahme sollte eine ausreichende Vergrößerung aufweisen, um eine repräsentative Verteilung der Zellgrößen in dem Schaum darzustellen. Der Zelldurchmesser für jede Zelle in der SEM-Aufnahme wird gemessen. Fehler, wie etwa "Blaslöcher", werden nicht als Zellen betrachtet. Blaslöcher sind Räume, die innerhalb eines Schaums definiert sind, die mehrere Zellwände und Zellstreben durchdringen und eine Vielzahl von Zellwand- und Zellstrebenfragmenten darin verbleibend aufweisen. Eine Zellwand ist ein polymerer Film zwischen zwei Zellen. Eine Zellstrebe ist eine polymere Domäne, worin sich drei oder mehr Zellen treffen.

Man berechnet die Querschnittsfläche für jede Zelle durch Annahme eines kreisförmigen Querschnitts. Deshalb wird ein ungefährer Durchmesser für nicht kreisförmige Zellquerschnitte geschätzt, der eine ungefähre Querschnittsfläche erzeugen wird (zum Beispiel wird für oval geformte Zellen ein Durchmesser in der Mitte zwischen dem größten und kleinsten Durchmesser verwendet). Unter Verwendung der Zelldurchmesser wird eine Querschnittsfläche für jede Zelle berechnet, indem angenommen wird, dass jede Zelle einen kreisförmigen Querschnitt hat (Querschnittsfläche = 1/2 · π · (Durchmesser/2)²).

Ein bequemes Programm zur Messung von Zelldurchmessern und Berechnung von Querschnittsflächen einer digital gerasterten Aufnahme ist die Public Domain NIH Image Software von United States National Institutes of Health (NIH) (erhältlich im Internet auf http://rsb.info.nih.gov/nih-image/). Die repräsentative Querschnittsfläche wird berechnet, indem die Querschnittsfläche für eine Zelle einer gegebenen Größe mit der Anzahl von Zellen dieser Größe in einer SEM-Aufnahme multipliziert wird. Die Zellgrößen werden in nm oder µm gemessen und auf zwei Stellen gerundet.

Man fertigt zur Bestimmung der Zellgrößenverteilung einen Graphen mit der Zellgröße an der X-Achse und der repräsentativen Fläche auf der Y-Achse an. Zellen, die einen Peak ("kleinen Peak") aufweisen, der der (den) kleinsten Zellgröße(n) entspricht, sind "kleine Zellen". Zellen, die einen Peak ("großen Peak") aufweisen, der (den) größten Zellgröße(n) entspricht, sind "große Zellen". "Mittlere Zellen" weisen "mittlere Peaks" zwischen einem kleinen Peak und einem großen Peak auf. In ähnlicher Weise sind, wenn sich ein kleiner Peak und ein großer Peak teilweise überlappen, Zellen, die den überlappenden Bereich aufweisen, mittlere Zellen. Mittlere Zellen können Eigenschaften, die ähnlich denen großer Zellen, kleiner Zellen sind, oder Eigenschaften irgendeiner Kombination von großen und kleinen Zellen aufweisen.

Ein "Peak" ist ein Punkt auf einem Graph, der mindestens einen Punkt aufweist, der fortschreitend entlang der X-Achse des Graphen einen niedrigeren Y-Achsenwert sowohl davor als auch danach hat, bevor ein Punkt mit einem höheren Y-Achsenwert vorhanden ist. Ein Peak kann mehr als einen Punkt mit gleichen Y-Achsenwerten enthalten (ein Plateau), vorausgesetzt, dass der Punkt auf beiden Seiten des Plateaus (fortschreitend entlang der X-Achse des Graphen) ein niedrigeren Y-Achsenwert aufweist als die Punkte, die das Plateau ausmachen.

Geeignete Drücke für die Durchführung des erfindungsgemäßen Verfahrens können beispielsweise im Bereich von ≥ 40 bar bis ≤ 300 bar liegen. Geeignete Temperaturen sind beispielsweise ≥ 10 °C bis ≤ 80 °C und vorzugsweise ≥ 25 °C bis ≤ 60 °C. Insbesondere bevorzugt sind Drücke und Temperaturen oberhalb des kritischen Punktes von CO₂, also ≥ 73,7 bar und ≥ 31 °C.

Geeignete gegenüber Isocyanaten reaktive Komponenten A) sind insbesondere Polyole, Polyamine, Polyaminoalkohole. und Polythiole.

Beispiele für Polyamine sind Ethylendiamin, 1,2- und 1,3-Diaminopropan, 1,4-Diaminobutan, 1,6-Diaminohexan, Isophorondiamin, ein Isomerengemisch von 2,2,4- und 2,4,4-Trimethylhexamethylendiamin, 2-Methylpentamethylendiamin, Diethylentriamin, 1,3- und 1,4-Xylylendiamin, α, α, α', α'-Tetramethyl-1,3- und -1,4-xylylendiamin und 4,4'-Diaminodicyclohexylmethan, Diethylmethylbenzoldiamin (DETDA), 4,4'-Diamino-3,3'-dichlordiphenylmethane (MOCA), Dimethylethylendiamin, 1,4-Bis(aminomethyl)cyclohexan, 4,4'-Diamino-3,3'-dimethyldicyclohexylmethan und 4,4'-Diamino-3,5-diethyl-3',5'-diisopropyldicyclohexylmethan. Weiterhin geeignet sind polymere Polyamine wie Polyoxyalkylenamine.

Beispiele für Aminoalkohole sind N-Aminoethylethanolamin, Ethanolamin, 3-Aminopropanol, Neopentanolamin und Diethanolamin.

Beispiele für Polythiole sind Di(2-mercaptoethyl)ether, Pentaerythritoltetrakisthioglycolat, Pentaerythritoltetrakis(3-mercaptopropionat) und 1,2-Bis((2-mercaptoethyl)thio)-3-mercaptopropan.

Die erfindungsgemäß verwendbaren Polyole können beispielsweise ein zahlenmittleres Molekulargewicht Mₙ von ≥ 62 g/mol bis ≤ 8000 g/mol, bevorzugt von ≥ 90 g/mol bis ≤ 5000 g/mol und mehr bevorzugt von ≥ 92 g/mol bis ≤ 1000 g/mol aufweisen. Die OH-Zahl der Komponente A) gibt im Falle eines einzelnen zugesetzten Polyols dessen OH-Zahl an. Im Falle von Mischungen wird die mittlere OH-Zahl angegeben. Dieser Wert kann anhand von DIN 53240 bestimmt werden. Die durchschnittliche OH-Funktionalität der genannten Polyole ist zum Beispiel ≥ 2, beispielsweise in einem Bereich von ≥ 2 bis ≤ 6, vorzugsweise von ≥ 2,1 bis ≤ 4 und mehr bevorzugt von ≥ 2,2 bis < 3.

Erfindungsgemäß verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxide und/oder Epichlorhydrins an di- oder polyfunktionelle Startermoleküle.

Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Erfindungsgemäß verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Erfindungsgemäß verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Erfindungsgemäß verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle sind zum Beispiel Diole mit primären OH-Gruppen und zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, Octandiol-1,8, 1,10-Decandiol, 2-Methyl-1,3-propandiol, 2,2-Dimethyl-1,3-propandiol, 3-Methyl-1, 5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Für das erfindungsgemäße Verfahren geeignete Tenside unterliegen zunächst hinsichtlich ihrer Auswahl keinen Beschränkungen. Günstigerweise erlauben es die Tenside dem Treibmittel, in der gegenüber Isocyanaten reaktiven Phase Emulsionen oder Mikroemulsionen zu bilden. Tenside sind beispielsweise alkoxylierte Alkanole wie Ether von linearen oder verzweigten Alkanolen mit ≥ 6 bis ≤ 30 Kohlenstoffatomen mit Polyalkylenglykolen mit > 5 bis ≤ 100 Alkylenoxideinheiten, alkoxylierte Alkylphenole, alkoxylierte Fettsäuren, Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Vorzugsweise umfasst die Tensidkomponente B) einen siloxanterminierten Polyalkylenoxid-Polyether. Diese Tenside können linear oder verzweigt aufgebaut sein. Solch ein erfindungsgemäß einzusetzendes Tensid kann beispielsweise durch die Hydrosilylierung einer ungesättigten Verbindung mit einem Polysiloxan, das Si-H Gruppen trägt, erhalten werden. Die ungesättigte Verbindung kann unter anderem das Reaktionsprodukt von Allylalkohol mit Ethylenoxid oder Propylenoxid sein.

Beispielsweise kann das Tensid auch durch die Reaktion von Polyetheralkoholen mit einem Polysiloxan, das Si-Cl Gruppen trägt, erhalten werden. In dem Polyether können sämtliche Endgruppen siloxanterminiert sein. Es ist auch möglich, dass gemischte Endgruppen vorliegen, dass also Siloxanendgruppen und OH-Endgruppen oder durch Reaktion funktionalisierte OH-Endgruppen wie Methoxygruppen vorliegen. Der Siloxanterminus kann eine Monosiloxangruppe R₃Si-O- oder eine Oligo- oder Polysiloxangruppe R₃Si-O-[R₂Si-O]ₙ-[AO] mit beispielsweise n ≥ 1 bis ≤ 100 sein. Im Fall von verzweigten Tensiden kann der Siloxanterminus auch gemäß R₃Si-O-RSi[AO]-O-[R₂Si-O]ₘ-O-SiR₃ aufgebaut sein mit beispielsweise m ≥ 0 bis ≤ 10 oder als Kammpolymer gemäß R₃Si-O-[RSi[AO]]ₙ-O-[R₂Si-O]ₘ-O-SiR₃ mit m+n ≥ 0 bis ≤ 250 aufgebaut sein. Vorzugsweise ist in den genannten Fällen der Rest R eine Allylgruppe, insbesondere eine Methylgruppe. Die Gruppe [AO] steht für einen Polyalkylenoxidrest, vorzugsweise Polyethylenoxid und/oder Polypropylenoxid. Die Gruppe [AO] kann auch über eine Verbindungsgruppe wie zum Beispiel C₃H₆ an das Siloxan angebunden werden.

Die erfindungsgemäß einsetzbaren Treibmittel C) liegen im überkritischen oder nahekritischen Zustand vor, das heißt, oberhalb der kritischen Temperatur und des kritischen Drucks. Das Treibmittel kann eine eigene Phase in der Reaktionsmischung bilden. Es kann beispielsweise überkritisches Kohlendioxid verwendet werden. Es ist möglich, dass das Kohlendioxid während der Reaktion zum Polyurethanschaum gebildet wird, beispielsweise durch die Reaktion von Isocyanaten mit Wasser oder mit Säuren. Beispiele für weitere Treibmittel sind lineare C₁-C₆-Alkane, verzweigte C₄-C₆-Alkane und cyclische C₃-C₆-Alkane. Spezielle Beispiele für Treibmittel sind Methan, Ethan, Propan, n-Butan, iso-Butan, n-Pentan, Cyclopentan, iso-Hexan, und/oder Cyclohexan. Weitere Beispiele sind die teil- oder perfluorierten Derivate von Methan, Ethan, Propan, n-Butan, iso-Butan, n-Pentan, Cyclopentan, Hexan, iso-Hexan, 2,3-Dimethylbutan und/oder Cyclohexan.

Der Anteil des Treibmittels in der Reaktionsmischung umfassend Komponenten A), B) und C), aber ohne D), kann beispielsweise ≥ 5 Gewichts-% bis ≤ 60 Gewichts-% betragen. Der Anteil des Treibmittels in der Reaktionsmischung umfassend Komponenten A), B), C) und D) kann beispielsweise ≥ 3 Gewichts-% bis ≤ 60 Gewichts-%, bevorzugt ≥ 4 Gewichts-% bis ≤ 40 Gewichts-% und besonders bevorzugt ≥ 5 Gewichts-% bis ≤ 30 Gewichts-% betragen.

Die Komponente D) ist ein Polyisocyanat, also ein Isocyanat mit einer NCO-Funktionalität von ≥ 2. Folglich liegt nun ein Reaktionsgemisch vor, welches zu Polyurethan- oder aber auch Polyisocyanuratschäumen reagieren kann. Dieses Reaktionsgemisch kann direkt in einem Mischkopf erzeugt werden.

Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass das-Isocyanat ein Prepolymer ist, welches erhältlich ist durch Reaktion eines Isocyanats mit einer NCO-Funktionalität von ≥ 2 und Polyolen mit einem Molekulargewicht von > 62 g/mol bis ≤ 8000 g/mol und OH-Funktionalitäten von ≥ 1,5 bis ≤ 6.

Selbstverständlich können in der Herstellung des Polyurethanschaums noch weitere übliche Hilfs- und Zusatzstoffe wie Katalysatoren, Flammschutzmittel, Trennmittel, Füllstoffe und dergleichen eingesetzt werden.

Die Anzahl der NCO-Gruppen in der Polyisocyanatkomponente D) und die Anzahl der gegenüber Isocyanaten reaktiven Gruppen der Komponente A) können beispielsweise in einem Zahlenverhältnis von ≥ 50:100 bis ≤ 500:100 zueinander stehen. Diese Kenngröße kann auch in einem Bereich von ≥ 160:100 bis ≤ 330:100 oder aber auch von ≥ 80:100 bis ≤ 140:100 liegen.

In einer Ausführungsform des erfindungsgemäßen Verfahrens herrscht nach dem Vermischen der Komponenten A), B), C), und D) ein Druck von ≥ 40 bar bis ≤ 150 bar. Dieser Zustand kann insbesondere in einem Mischkopf und nach einem Mischkopf herrschen. Der Druck kann auch ≥ 80 bar bis ≤ 120 bar betragen. Bei solchen Drücken können überkritische oder nahekritische Bedingungen für das eingesetzte Treibmittel aufrecht erhalten werden.

In einer weiteren Ausführungsform des erfindungsgemäßen Verfahrens sind in dem Mischkopf Mittel angeordnet, um den Strömungswiderstand beim Austragen der Mischung umfassend die Komponenten A), B), C) und D) zu erhöhen. Solche Mittel können beispielsweise in Strömungsrichtung gesehen nach einer Mischkammer des Mischkopfs angeordnete Gitter, Spaltgitter und/oder Siebe sein. Durch die Erhöhung des Strömungswiderstandes kann gezielt der Druck beeinflusst werden, den die Reaktionsmischung vor dem Austragen aus dem Mischkopf aufweist. Der so eingestellte Druck kann niedriger sein als der Druck beim Mischen der Komponenten der Reaktionsmischung. Auf diese Weise kann auf die Bildung und Expansion von Treibmitteltröpfchen oder -bläschen Einfluss genommen werden. Solche Mittel werden beispielsweise in WO 2001/98389 A1 beschrieben.

In einer weiteren Ausführungsform des erfindungsgemäßen Verfahrens umfasst die Komponente A) ein Polyesterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g. Geeignete Polyesterpolyole sind unter anderem Produkte mit dem Handelsnamen Desmophen® VP.PU 1431 der Firma Bayer MaterialScience AG erhältlich. Die OH-Zahl des Polyesterpolyols kann auch ≥ 290 mg KOH/g bis ≤ 320 mg KOH/g betragen. Kurzkettige Polyole sind insbesondere Polyole mit > 2 bis ≤ 6 C-Atomen. Bevorzugt ist Glycerin. Dieses hat eine OH-Zahl von 1827 mg KOH/g. Durch die Zugabe des kurzkettigen Polyols lässt sich die Polarität der Polyolphase günstig erhöhen.

In einer weiteren Ausführungsform des erfindungsgemäßen Verfahrens umfasst die Tensidkomponente B) ein Polyethylenoxid-Polyether mit Oligodimethylsiloxan-Endgruppen, wobei die Zahl der Dimethylsiloxan-Einheiten ≤ 5 ist. Solch ein Polyether kann beispielsweise durch die idealisierte Formel R'O-[CH₂CH₂O]ₒ-X-SiR(O-SiR₃)((O-SiR₂)ₚR) mit R = CH₃ und R' = H, CH₃ oder COCH₃ dargestellt werden. Hierbei kann X eine optionale verbindende Gruppe wie Alkyl-α oder ω-diyl sein, o ist ≥ 1 bis ≤ 100, vorzugsweise ≥ 5 bis ≤ 30 und mehr bevorzugt ≥ 10 bis ≤ 20 und p ist ≤ 2. Die Gruppe X kann beispielsweise -CH₂-CH₂-CH₂- sein. Ein bevorzugtes Tensid ist 3- (Polyoxyethylen)propylheptamethyltrisiloxan. Dieses ist kommerziell von der Firma Dow Corning unter dem Handelsnamen Q2-5211 ® erhältlich.

In einer weiteren Ausfübrungsform des erfindungsgemäßen Verfahrens weist die die Tensidkomponente B) einen HLB-Wert von ≥ 10 bis ≤ 18 auf. Diese Kenngröße kann auch in einem Bereich von ≥ 11 bis ≤ 16 oder in einem Bereich von ≥ 12 bis ≤ 14 liegen. Der HLB-Wert (hydrophilic-lipophilic-balance) beschreibt den hydrophilen und lipophilen Anteil von hauptsächlich nichtionischen Tensiden. Der HLB-Wert für nichtionische Tenside kann folgendermaßen berechnet werden: HLB = 20 · (1 - Mₕ/M), wobei Mₕ die Molmasse des hydrophoben Anteils eines Moleküls ist und M die Molmasse des gesamten Moleküls.

In einer weiteren Ausführungsform des erfindungsgemäßen Verfahrens liegt die Tensidkomponente B) kovalent an eine gegenüber Isocyanaten reaktive Verbindung oder an ein Polyisocyanat gebunden vor. Vorzugsweise erfolgt die Anbindung über eine freie OH-Gruppe des Tensids. Eine kovalente Anbindung an ein Polyol kann beispielsweise im Falle eines Polyesterpolyols durch eine Veresterungsreaktion mit einer Säure-Endgruppe des Polyols erfolge. Die Anbindung an ein Polyisocyanat erfolgt durch Reaktion einer NCO-Gruppe mit einer freien OH-Gruppe des Tensids. Durch die kovalente Anbindung des Tensids an eine Komponente der Polyurethanmatrix wird dieses immobilisiert, so dass ein Austreten aus dem erhaltenen Polyurethanschaum verhindert werden kann.

In einer weiteren Ausführungsform des erfindungsgemäßen Verfahrens umfasst die Polyisocyanatkomponente D) monomeres und/oder polymeres Diphenylmethan-4,4'-diisocyanat. Solch ein Polyisocyanat ist unter dem Handelsnamen Desmodur ® 44V70L als ein Gemisch von Diphenylmethan-4,4'-diisocyanat (MDI) mit Isomeren und höherfunktionellen Homologen von der Firma Bayer MaterialScience erhältlich.

In einer weiteren Ausführungsform des erfindungsgemäßen Verfahrens beträgt in der Mischung umfassend die Komponenten A), B) und C) der relative Gewichtsanteil γ der Tensidkomponente B) an der Gesamtzusammensetzung ≥ 0,05 bis ≤ 0,3. Diese Mischung kann noch weitere, übliche Hilfs- und Zusatzstoffe umfassen. Der Ausdruck "Mischung umfassend A), B) und C)" ist als die fertige Formulierung vor der Zugabe des Polyisocyanats zu verstehen. Vorzugsweise weist weiterhin die Mischung eine Temperatur von ≥ 20 °C bis ≤ 80 °C auf. Unter diesen Bedingungen lassen sich bei möglichst geringem Tensideinsatz Mikroemulsionen des Treibmittels in der Polyolphase erwarten. Der γ-Wert kann auch ≥ 0,10 bis ≤ 0,26 oder auch ≥ 0,15 bis ≤ 0,20 betragen. Die Temperatur kann zwischen ≥ 20 °C und ≤ 80 °C liegen.

In einer weiteren Ausführungsform des erfindungsgemäßen Verfahrens liegen die Komponenten A), B), C), und D) in den folgenden Mengen vor:
A) ≥ 25 Gewichts-% bis ≤ 35 Gewichts-%
B) ≥ 4 Gewichts-% bis ≤ 15 Gewichts-%
C) ≥ 5 Gewichts-% bis ≤ 40 Gewichts-%
D) ≥ 30 Gewichts-% bis ≤ 60 Gewichts-%.

Hierbei addieren sich die Angaben in Gewichts-% zu ≤ 100 Gewichts-%. Bevorzugte Mengen der Komponenten sind:
A) ≥ 29 Gewichts-% bis ≤ 31 Gewichts-%
B) ≥ 8 Gewichts-% bis ≤ 12 Gewichts-%
C) ≥ 8 Gewichts-% bis ≤ 20 Gewichts-%
D) ≥ 40 Gewichts-% bis ≤ 50 Gewichts-%.

Ein weiterer Gegenstand der vorliegenden Erfindung ist ein Polyurethanschaum, welcher durch ein erfindungsgemäßes Verfahren erhältlich ist. Zu Details des Verfahrens wird auf die obigen Ausführen verwiesen. Der erfindungsgemäße Schaum kann beispielsweise eine Rohdichte gemäß DIN EN 1602 von ≥ 10 kg/m³ bis ≤ 300 kg/m³ und vorzugsweise von ≥ 20 kg/m³ bis ≤ 100 kg/m³ aufweisen. Bevorzugte Verwendungen für den erfindungsgemäßen Schaum liegen in der Wärmeisolierung.

In einer Ausführungsform des erfindungsgemäßen Polyurethanschaums liegt dieser als Schaum mit einem mittleren Porendurchmesser von ≥ 10 nm bis ≤ 10000 nm vor. Der Porendurchmesser kann auch ≥ 20 nm bis ≤ 1000 nm und ≥ 40 nm bis ≤ 800 nm betragen. Vorzugsweise wird der Porendurchmesser mittels Elektronenmikroskopie und Vermessen der Poren bestimmt. Alternative Verfahren sind die Bestimmung durch Quecksilberintrusion (DIN 66133) und Stickstoffsorption (DIN 66134).

In einer weiteren Ausführungsform des erfindungsgemäßen Polyurethanschaums weist dieser eine bimodale Zellgrößenverteilung auf, ein Maximum der Zellgrößenverteilung liegt im Bereich von ≥ 10 nm bis ≤ 500 nm liegt und ein weiteres Maximum der Zellgrößenverteilung liegt im Bereich von ≥ 1 µm bis ≤ 500 µm. Vorzugsweise liegen die Maxima im Bereich von ≥ 20 nm bis ≤ 200 nm beziehungsweise ≥ 10 µm bis ≤ 200 µm und mehr bevorzugt im Bereich von ≥ 30 nm bis ≤ 100 mm beziehungsweise ≥ 20 µm bis ≤ 100 µm.

In einer weiteren Ausführungsform des erfindungsgemäßen Polyurethanschaums weist dieser eine Porendichte von ≥ 10⁹ Poren/cm³ bis ≤ 10¹⁸ Poren/cm³ auf. Die Porendichte wird wie bereits geschildert mittels Elektronenmikroskopie die Anzahl der Poren pro Flächeneinheit auf das Volumen hochgerechnet. Die Dichte kann auch in einem Bereich von ≥ 10¹² Poren/cm³ bis ≤ 10¹⁷ Poren/cm³ und vorzugsweise ≥ 10¹⁴ Poren/cm³ bis ≤ 10¹⁶ Poren/cm³ liegen.

In einer weiteren Ausführungsform des erfindungsgemäßen Polyurethanschaums weist dieser eine Wärmeleitfähigkeit von ≥ 6 mW/m K bis ≤ 30 mW/m K auf. Diese kann mittels DIN 52616 bestimmt werden und auch in einem Bereich von ≥ 8 mW/m K bis ≤ 25 mW/m K und vorzugsweise ≥ 10 mW/m K bis ≤ 20 mW/m K liegen. Vorzugsweise handelt es sich bei diesem Schaum um einen rein mit CO₂ getriebenen Schaum. Mit anderen Worten ist die zur Herstellung dieses Schaums eingesetzte Treibmittelkompouente ausschließlich CO₂.

Die vorliegende Erfindung wird anhand der nachfolgenden Beispiele in Verbindung mit den Figuren weiter erläutert. Es-zeigen:
- FIG. 1: eine Auftragung der Temperatur T gegen den Tensidgehalt γ für das in Beispiel 1 charakterisierte System
- FIG. 2: eine Auftragung der Temperatur T gegen den Tensidgehalt γ für das in Beispiel 2 charakterisierte System
- FIG. 3 und 4: Rasterelektronenmikroskop-Aufnahmen des in Beispiel 3 erhaltenen Schaums

In den Beispielen und Figuren gibt der Wert α den relativen Gewichtsanteil des Treibmittels, also der unpolaren Phase, in der Polyol/Treibmittelmischung an. Der Wert Ψ bezeichnet die Massenbrüche der einzelnen Komponenten in der polaren Phase. Der Wert γ bezeichnet den relativen Gewichtsanteil der Tensidkomponente an der Gesamtzusammensetzung. In den Figuren bedeuten die Bezugszeichen 1 ein einphasiges Gebiet, in dem Mikroemulsionen auftreten, 2 ein zweiphasiges Gebiet, wobei das Tensid in der polaren Phase gelöst ist und 2̅ ein zweiphasiges Gebiet, in dem das Tensid in der unpolaren Phase gelöst ist.

Die einzelnen Beispiele betreffen jeweils bestimmte Polyol/Treibmittel/Tensidsysteme. Innerhalb der Beispiele wurden verschiedene Rezepturen mit unterschiedlichen Anteil α des Treibmittels näher charakterisiert. Bei jeweils konstantem Anteil α wurde der Anteil γ der Tensidkomponente verändert. Die Zusammensetzung der Tensidkomponente selber wurde in den jeweiligen Beispielen konstant gehalten. Die Temperatur des Systems wurde notiert und Verbindungslinien zwischen den Messpunkten interpoliert, um die Grenzen zwischen den ein-, zwei- und dreiphasigen Gebieten zu bestimmen. Auf diese Weise wurde ein Diagramm erhalten, welches einem Kahlweit-Fisch-Diagramm (M. Kahlweit, R. Strey, Angewandte Chemie International Edition, Band 28(8), Seite 654 (1985)) vergleichbar ist. Von besonderem Interesse für die Charakterisierung des Systems ist der Schnittpunkt der Verbindungslinien. Bei bekannter Lage des Schnittpunkts im Koordinatensystem von γ und T kann man bei einem geringfügig größeren Tensidanteil γ eine Mikroemulsion erwarten.

Die in den Beispielen verwendeten Substanznamen haben die folgende Bedeutung:
Desmophen® VP.PU 1431: Difunktionelles Polyesterpolyol der Firma Bayer MaterialScience AG, OH-Zahl 310 mg KOH/g
TCPP: Tris(2-chlorisopropyl)-phosphat
Q2-5211®: Siloxylierter Polyethylenoxidpolyetler der Firma Dow Corning, 3-(Polyoxyethylen)propylleptametlyltrisiloxan, Endgruppen: OH und Heptamethyltrisiloxan, 32% Siloxangruppen, 68% Ethylenoxideinheiten; HLB-Wert des EO-Anteils: 11,5
Desmorapid® 726b: Katalysator der Firma Bayer MaterialScience AG
Desmodur® 44V70L: Gemisch von Diphenylmethan-4,4'-diisocyanat (MDI) mit Isomeren und höherfunktionellen Homologen der Firma Bayer MaterialScience AG
Desmodur® 85/25: Gemisch von Diphenylmethan-4,4'-diisocyanat (MDI) mit Isomeren und höherfunktionellen Homologen der Firma Bayer MaterialScience AG

### Beispiel 1

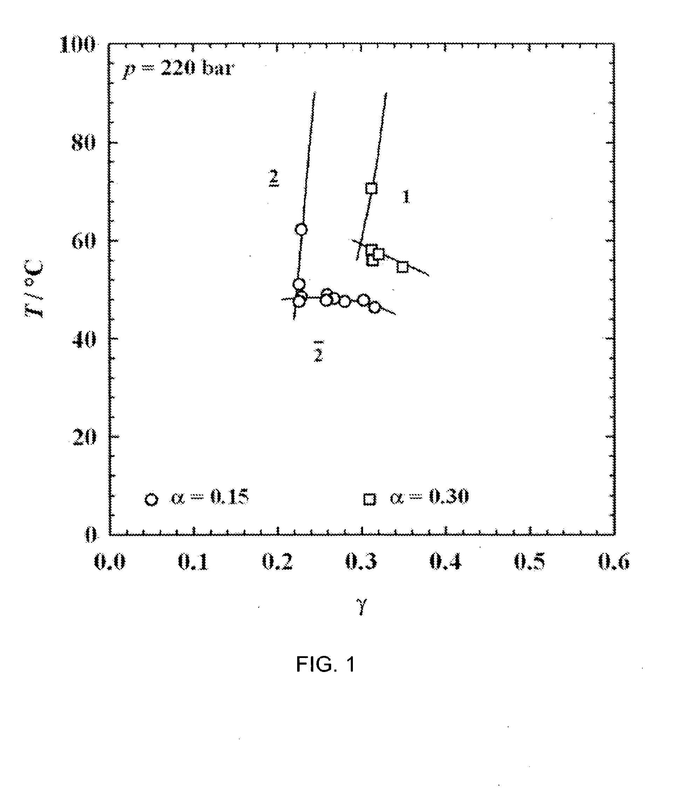

In diesem Beispiel wurde für die Tensidkomponente Q2-5211® eingesetzt. Als Treibmittel wurde überkritisches CO₂ (scCO₂) verwendet. Die Polyolkomponente war eine Mischung aus 80 Gewichtsteilen Desmophen® VP.PU 1431, 15 Gewichststeilen Glycerin und 15 Gewichtsteilen TCPP. Dieses entspricht Massenbrüchen von Ψ_{VP.PU 1431} = 0,728, Ψ_{Glyeerin} = 0,136 und Ψ_{TCPP} = 0,136. Es wurden Rezepturen mit α = 0,15 und α = 0,30 angesetzt. Der Druck in diesem Beispiel betrug 220 bar. Die Ergebnisse sind in FIG. 1 wiedergegeben. Am Schnittpunkt der Verbindungslinien im Phasendiagramm wurden die folgenden Parameter ermittelt:

| α-Wert | γ-wert | Temperatur am Schnittpunkt |
|---|---|---|
| 0,15 | 0,22 | 48 °C |
| 0,30 | 0,29 | 58 °C |

### Beispiel 2

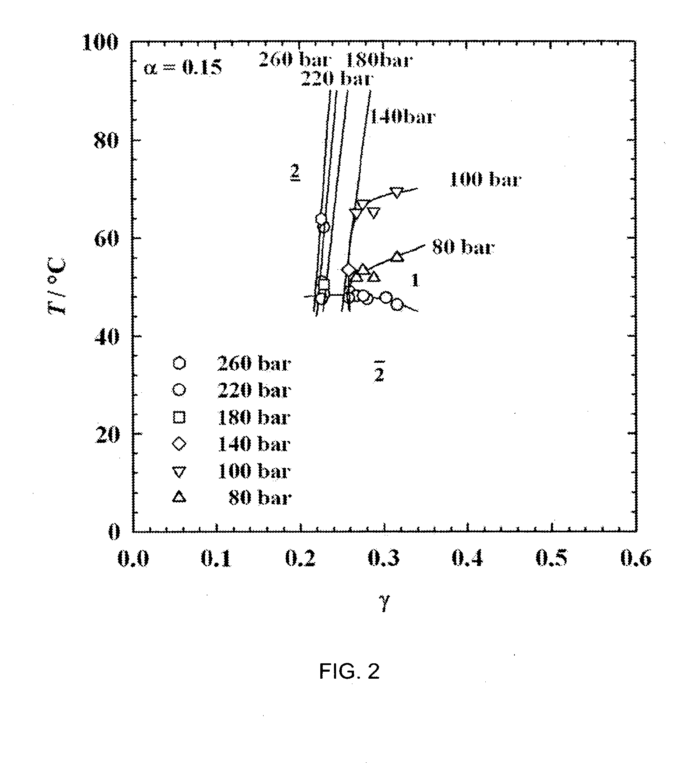

Hier wurde dasselbe System wie in Beispiel 1, also Q2-5211®, überkritisches CO₂ und als Polyolkomponente eine Mischung aus 80 Gewichtsteilen Desmopben® VP.PU 1431, 15 Gewichtsteilen Glycerin und 15 Gewichtsteilen TCPP eingesetzt. Dieses entspricht wieder Massenbrüchen von Ψ_{VP.PU 1431} = 0,728, Ψ_{Glycelin} = 0,136 und Ψ_{TCPP} = 0,136. Bei einem α-Wert von 0,15 wurde der Druck variiert. Die Ergebnisse sind in FIG. 2 wiedergegeben. Aus diesem Beispiel lässt sich die Erkenntnis ableiten, dass die Lage des Mikroemulsionsbereichs durch Veränderung des Drucks angepasst werden kann. Am Schnittpunkt der Verbindungslinien im Phasendiagramm wurden die folgenden Parameter ermittelt:

| Druck | γ-Wert | Temperatur am Schnittpunkt |
|---|---|---|
| 260 bar | 0,22 | 48 °C |
| 220 bar | 0,23 | 48 °C |
| 180 bar | 0,23 | 48 °C |
| 140 bar | 0,25 | 48 °C |
| 100 bar | 0,25 | 48 °C |
| 80 bar | 0,26 | 48 °C |

### Beispiel 3

Eine Mikroemulsion wurde zu einem Polyuretlanschaum umgesetzt. Hierbei wurde die Mischung aus Polyolen, TCPP und Tensid bei 58 °C und einem Druck von 170 bar mit CO₂ versetzt. Ohne auf eine Theorie beschränkt zu sein, wird angenommen, dass sich hierbei eine Mikroemulsion von scCO₂-Tröpfchen in der Polyolphase bildete. Diese Emulsion wurde in einem Hochdruck-Mischkopf mit dem Polyisocyanat versetzt. Anschließend wurde die Reaktionsmischung in einen offenen Becher eingebracht. Man erhielt einen Freischaum.

Die Rezeptur lautete wie folgt:

| Komponente | OH-Zahl | Gewichtsteile | Gewichts-% |
|---|---|---|---|
| Desmophen® VP.PU 1431 | 310 mg KOH/g | 80 | 29,93% |
| Glycerin | 1827 mg KOH/g | 15 | 4,86% |
| TCPP | 0 | 15 | 4,86% |
| Q2-5211® | nicht bestimmt | 45 | 14,59% |
| Desmorapid ® 726b | 0 | 0,30 | 0,10% |
| CO₂ | 0 | 19,4 | 6,29% |
| Desmodur® 44V70L (NCO-Gehalt 30,9 Gew.-%) | | 133,7 | 43,37% |

### Reaktionsparameter:

| | |
|---|---|
| Isocyanattemperatur: | 58 °C |
| Polyoltemperatur: | 59 °C |
| Mischzeit: | 2 Sekunden |

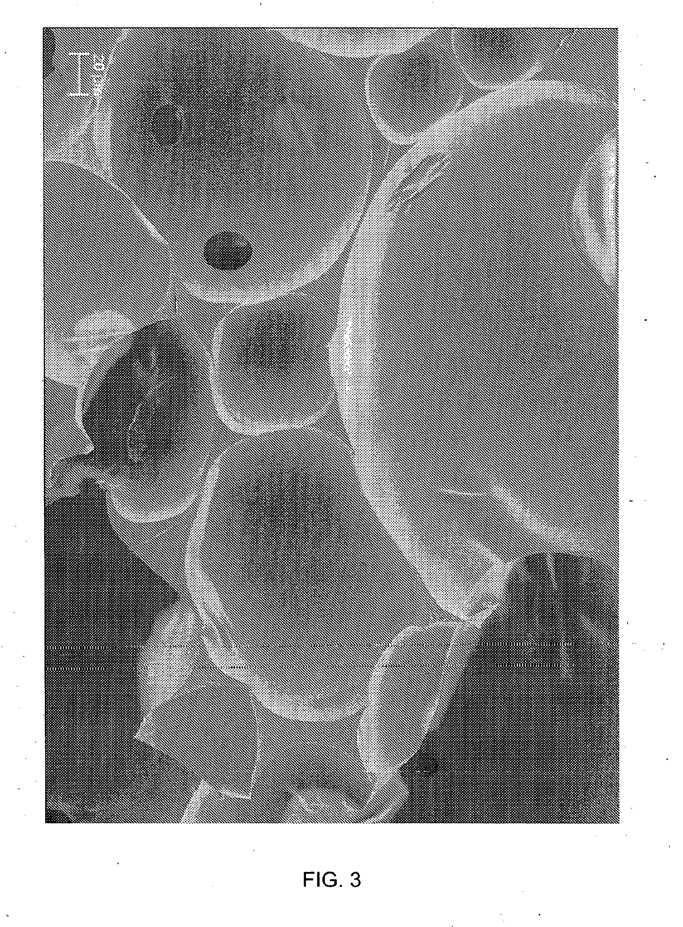

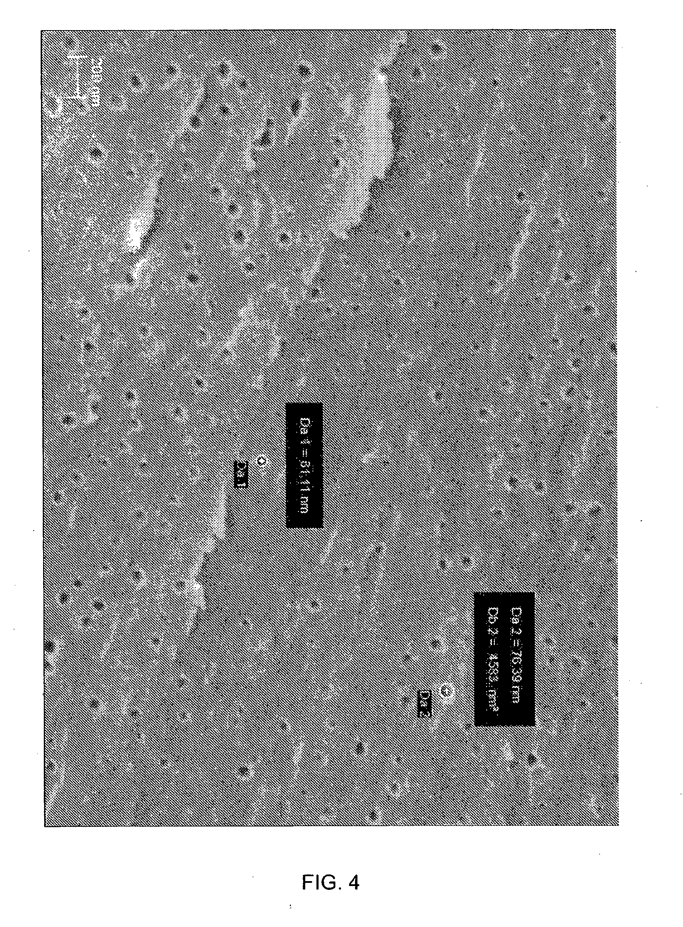

Die α- und γ-Werte sind inklusive dem Isocyanat berechnet worden. Das Schussgewicht betrug insgesamt 120 Gramm. Der erhaltene Schaum wurde mittels Rasterelektronenmikroskopie untersucht. FIG. 3 und 4 zeigen Rasterelektronen-Mikroskopaufnahmen bei unterschiedlichen Maßstäben. Man erkennt, dass in den Zwickeln (dieser Begriff bezeichnet in der sphärischen Geometrie eine Punktmenge, die von zwei Großkreisen begrenzt wird) des gebildeten Schaum Poren mit einem Durchmesser von deutlich weniger als 100 nm gebildet haben. Der durchschnittliche Porenradius beträgt 15 ± 6,8 nm. Die durchschnittliche Anzahldichte der Poren betrug 4,7 · 10¹⁴.

## Patentansprüche

1. Verfahren zur Herstellung eines Polyurethanschaums, umfassend die Schritte:
- Bereitstellen einer Mischung in einem Mischkopf, wobei die Mischung umfasst:
A) eine gegenüber Isocyanaten reaktive Komponente;
B) eine Tensidkomponente;
C) eine Treibmittelkomponente ausgewählt aus der Gruppe umfassend lineare, verzweigte oder cyclische C₁- bis C₆-Alkane, lineare, verzweigte oder cyclische C₁- bis C₆-Fluoralkane, N₂, O₂, Argon und/oder CO₂,
wobei die Treibmittelkomponente C) im überkritischen oder nahekritischen Zustand vorliegt;
D) eine Polyisocyanatkomponente;
- Austragen der Mischung umfassend die Komponenten A), B), C) und D) aus dem Mischkopf, wobei beim Austragen der Mischung der in der Mischung herrschende Druck auf Atmosphärendruck erniedrigt wird,
wobei nach dem Vermischen der Komponenten A), B), C), und D) ein Druck von ≥ 80 bar bis ≤ 150 bar herrscht,
wobei der Anteil der Treibminelkomponente C) in der Reaktionsmischung umfassend Komponenten A), B), C) und D) ≥ 3 Gewichts-% bis ≤ 60 Gewichts-% beträgt,
wobei die Temperatur zwischen ≥ 20 °C und ≤ 80 °C liegt, und
wobei in der Mischung umfassend die Komponenten A), B) und C) der relative Gewichtsanteil γ der Tensidkomponente B) an der Gesamtzusammensetzung ≥ 0,05 bis ≤ 0,3 beträgt.

2. Verfahren gemäß Anspruch 1, wobei in dem Mischkopf Mittel angeordnet sind, um den Strömungswiderstand beim Austragen der Mischung umfassend die Komponenten A), B), C) und D) zu erhöhten.

3. Verfahren gemäß Anspruch 1, wobei die Komponente A) ein Polyesterpolyol mit einer Hydroxylzahl von ≥ 200 mg KOH/g bis ≤ 600 mg KOH/g und ein kurzkettiges Polyol mit einer Hydroxylzahl von ≥ 800 mg KOH/g umfasst.

4. Verfahren gemäß Anspruch 1, wobei die Tensidkomponente B) ein Polyethylenoxid-Polyether mit Oligodimethylsiloxan-Endgruppen umfasst, wobei die Zahl der Dimethylsiloxan-Einheiten ≤ 5 ist.

5. Verfahren gemäß Anspruch 1, wobei die Tensidkomponente einen HLB-Wert von ≥ 10 bis ≤ 18 aufweist.

6. Verfahren gemäß Anspruch 1, wobei die Tensidkomponente B) kovalent an eine gegenüber Isocyanaten reaktive Verbindung oder an ein Polyisocyanat gebunden vorliegt.

7. Verfahren gemäß Anspruch 1, wobei die Polyisocyanatkomponente D) monomeres und/oder polymeres Diphenylmethan-4,4'-diisocyanat umfasst.

8. Verfahren gemäß Anspruch 1, wobei die Komponenten A), B), C), und D) in den folgenden Mengen vorliegen:
A) ≥ 25 Gewichts% bis ≤ 35 Gewichts-%
B) ≥ 4 Gewichts-% bis ≤ 15 Gewichts-%
C) ≥ 5 Gewichts-% bis ≤ 40 Gewichts-%
D) ≥ 30 Gewichts-% bis ≤ 60 Gewichts%.

9. Polyurethanschaum, erhältlich durch ein Verfahren gemäß Anspruch 1.

10. Polyurethanschaum gemäß Anspruch 9, vorliegend als Schaum mit einem mittleren Porendurchmesser von ≥ 10 nm bis ≤ 10000 nm.

11. Polyurethanschaum gemäß Anspruch 10 mit bimodaler Zellgrößenverteilung, wobei ein Maximum der Zellgrößenverteitung im Bereich von ≥ 10 nm bis ≤ 500 nm liegt und ein weiteres Maximum der Zellgrößenverteilung im Bereich von ≥ 1 µm bis ≤ 500 µm liegt.

12. Polyurethanschaum gemäß Anspruch 10 mit einer Porendichte von ≥ 10⁹ Poren/cm³ bis ≤ 10¹⁸ Poren/cm³.

13. Polyurethanschaum gemäß Anspruch 10 mit einer Wärmeleitfähigkeit von ≥ 6 mW/m K bis ≤ 30 mW/m K.

## Claims

1. Process for producing a polyurethane foam, comprising the following steps:
- providing a mixture in a mixing head, where the mixture comprises:
A) a component reactive towards isocyanates;
B) a surfactant component;
C) a blowing agent component selected from the group consisting of linear, branched or cyclic C₁-to C₆-alkanes, linear, branched or cyclic C₁- to C₆-fluoroalkanes, N₂, O₂, argon and/or CO₂,
where blowing agent component C) is present in the supercritical or near-critical state;
D) a polyisocyanate component;
- discharging the mixture comprising components A), B), C), and D) from the mixing head
where, during the discharge of the mixture, the pressure prevailing in the mixture is lowered to atmospheric pressure, where the prevailing pressure after the mixing of components A), B), C), and D) is from ≥ 80 bar to ≤ 150 bar, where the proportion of blowing agent component C) in the reaction mixture comprising components A), B), C) and D) is from ≥ 3% by weight to ≤ 60% by weight,
where the temperature is from ≥ 20°C to ≤ 80°C, and
where the relative proportion by weight γ of surfactant component B) in the mixture comprising components A), B) and C) is from ≥ 0.05 to ≤ 0.3, based on the entire composition.

2. Process according to Claim 1, where means have been arranged in the mixing head in order to increase the resistance to flow during the discharge of the mixture comprising components A), B), C) and D).

3. Process according to Claim 1, where component A) comprises a polyester polyol with a hydroxy number from ≥ 200 mg KOH/g to ≤ 600 mg KOH/g and a short-chain polyol with a hydroxy number of ≥ 800 mg KOH/g.

4. Process according to Claim 1, where surfactant component B) is a polyethylene oxide-polyether having oligodimethylsiloxane end groups, where the number of the dimethylsiloxane units is ≤ 5.

5. Process according to Claim 1, where the HLB value of the surfactant component is from ≥ 10 to ≤ 18.

6. Process according to Claim 1, where surfactant component B) is present in a form covalently bonded to a compound reactive towards isocyanates or to a polyisocyanate.

7. Process according to Claim 1, where polyisocyanate component D) comprises monomeric and/or polymeric diphenylmethane 4,4'-diisocyanate.

8. Process according to Claim 1, where the amounts present of components A), B), C), and D) are as follows:
A) from ≥ 25% by weight to ≤ 35% by weight
B) from ≥ 4% by weight to ≤ 15% by weight
C) from ≥ 5% by weight to ≤ 40% by weight
D) from ≥ 30% by weight to ≤ 60% by weight.

9. Polyurethane foam obtainable by a process according to Claim 1.

10. Polyurethane foam according to Claim 9, present in the form of foam with an average pore diameter of from ≥ 10 nm to ≤ 10 000 nm.

11. Polyurethane foam according to Claim 10 with bimodal cell size distribution, where one maximum of the cell size distribution is in the range from ≥10 nm to ≤500 nm and a further maximum of the cell size distribution is in the range from ≥1 µm to ≤500 µm.

12. Polyurethane foam according to Claim 10 with a pore density of from ≥ 10⁹ pores/cm³ to ≤ 10¹⁸ pores/cm³.

13. Polyurethane foam according to Claim 10 with a thermal conductivity of from ≥ 6 mW/m K to ≤ 30 mW/m K.

## Revendications

1. Procédé pour la production d'une mousse de polyuréthane, comprenant les étapes :
- préparation d'un mélange dans une tête de mélange, le mélange comprenant :
A) un composant réactif vis-à-vis d'isocyanates ;
B) un composant tensioactif ;
C) un composant agent porogène choisi dans le groupe comprenant des alcanes en C₁-C₆ linéaires, ramifiés ou cycliques, des fluoroalcanes en C₁-C₆ linéaires, ramifiés ou cycliques, N₂, O₂, l'argon et/ou CO₂,
le composant agent porogène C) se trouvant à l'état supercritique ou quasi critique ;
D) un composant polyisocyanate ;
- décharge du mélange comprenant les composants A), B), C) et D) de la tête de mélange, en abaissant jusqu'à la pression atmosphérique lors de la décharge du mélange la pression régnant dans le mélange,
une pression de ≥ 80 bars à ≤ 150 bars régnant après le mélange des composants A), B), C) et D),
la proportion du composant agent porogène C) dans le mélange réactionnel qui comprend les composants A), B), C) et D) valant ≥ 3 % en poids à ≤ 60 % en poids,
la température étant comprise entre ≥ 20 °C et ≤ 80 °C, et
dans le mélange comprenant les composants A), B) et C) la proportion pondérale relative y du composant tensioactif B) par rapport à la composition totale valant de ≥ 0,05 à ≤ 0,3.

2. Procédé selon la revendication 1, dans lequel sont disposés dans la tête de mélange des moyens destinés à augmenter la résistance hydraulique lors de la décharge du mélange comprenant les composants A), B), C) et D).

3. Procédé selon la revendication 1, dans lequel le composant A) comprend un polyesterpolyol ayant un indice de groupes hydroxy de ≥ 200 mg de KOH/g à ≤ 600 mg de KOH/g et un polyol à courte chaîne ayant un indice de groupes hydroxy de ≥ 800 mg de KOH/g.

4. Procédé selon la revendication 1, dans lequel le composant tensioactif B) est un polyoxyéthylène-polyéther comportant des groupes terminaux oligodiméthylsiloxane, le nombre des motifs diméthylsiloxane étant ≤ 5.

5. Procédé selon la revendication 1, dans lequel le composant tensioactif présente une valeur HLB de ≥ 10 à ≤ 18.

6. Procédé selon la revendication 1, dans lequel le composant tensioactif B) se trouve lié par covalence à un composé réactif vis-à-vis d'isocyanates ou à un polyisocyanate.

7. Procédé selon la revendication 1, dans lequel le composant polyisocyanate D) comprend du diphénylméthane-4,4'-diisocyanate monomère et/ou polymère.

8. Procédé selon la revendication 1, dans lequel les composants A), B), C) et D) se trouvent en les quantités suivantes :
A) ≥ 25 % en poids à ≤ 35 % en poids
B) ≥ 4 % en poids à ≤ 15 % en poids
C) ≥ 5 % en poids à ≤ 40 % en poids
D) ≥ 30 % en poids à ≤ 60 % en poids.

9. Mousse de polyuréthane, pouvant être obtenue par un procédé selon la revendication 1.

10. Mousse de polyuréthane selon la revendication 9, présente sous forme de mousse ayant un diamètre moyen de pore de ≥ 10 nm à ≤ 10 000 nm.

11. Mousse de polyuréthane selon la revendication 10, à distribution bimodale de tailles de cellules, un maximum de la distribution de tailles de cellules se situant dans la plage de ≥ 10 nm à ≤ 500 nm et un autre maximum de la distribution de tailles de cellules se situant dans la plage de ≥ 1 µm à ≤ 500 µm.

12. Mousse de polyuréthane selon la revendication 10, ayant une densité de pores de ≥ 10⁹ pores/cm³ à ≤ 10¹⁸ pores/cm³.

13. Mousse de polyuréthane selon la revendication 10, ayant une conductivité thermique de ≥ 6 mW/m K à ≤ 30 mW/m K.
